# EUROPEAN PATENT APPLICATION

(11) **EP 4 844 615 A1**
(43) Date of publication of application: **25.11.2026**
(21) Application number: 25794748.1
(22) Date of filing: 24.04.2025
(51) Int. Cl.: G06F 21/62, G06F 21/60, G06F 21/31, G06N 3/08, G06N 3/0475

(54) **METHOD FOR PROCESSING USER REQUEST USING ON-DEVICE AI MODEL, AND ELECTRONIC DEVICE FOR PERFORMING SAME**

(30) Priority: 24.04.2024 KR 20240055017; 02.12.2024 KR 20240176903
(71) Applicant: Samsung Electronics Co., Ltd., Suwon-si, Gyeonggi-do 16677 (KR)
(72) Inventor: KO, Hyeonmok, Suwon-si, Gyeonggi-do 16677 (KR); LEE, Dongseop, Suwon-si, Gyeonggi-do 16677 (KR)
(74) Representative: Gulde & Partner
(86) International application number: PCT/KR2025/005563
(87) International publication number: WO 2025/226059

(57) **Abstract**

A method of processing a user request by an electronic device using a parameter efficient fine-tuning (PEFT) model, the method including: obtaining, by the electronic device, a prompt from a user; determining, by the electronic device, whether execution of the PEFT model is required to process the prompt; based on determining that execution of the PEFT model is not required, executing a foundation model by the electronic device; based on determining that execution of the PEFT model is required, performing user authentication by the electronic device; based on the user authentication being successful, obtaining, by the electronic device, at least one matrix corresponding to the PEFT model; and executing, by the electronic device, the PEFT model using the at least one matrix.

## Description

### TECHNICAL FIELD

The disclosure relates to a method of processing a user request by using an on-device artificial intelligence (AI) model and an electronic device for performing the method, and more particularly, to a method of enhancing security by encrypting (or locking) a component for generating a Query Key Value/Weight (QKV/W) matrix required to execute (or run) the on-device AI model.

### BACKGROUND ART

Recently, approaches for pre-training a large model by using a general dataset and then fine-tuning the pre-trained large model according to individual needs of users have been widely used. However, when all parameters of a large model are trained during fine-tuning, too much time and too many computational resources are consumed, so parameter efficient fine-tuning (PEFT) techniques for training only some of the parameters have been developed to increase efficiency.

When fine-tuning a large model by using these PEFT techniques, a user's efforts, know-how, and personal information may be used. Therefore, the user may not want others to use the fine-tuned model without permission, and it is also necessary to maintain security for the fine-tuned model in terms of protecting personal information.

### DISCLOSURE OF INVENTION

### SOLUTION TO PROBLEM

According to an aspect of the disclosure, a method of processing a user request by an electronic device using a parameter efficient fine-tuning (PEFT) model includes: obtaining, by the electronic device, a prompt from a user; determining, by the electronic device, whether execution of the PEFT model is required to process the prompt; based on determining that execution of the PEFT model is not required, executing a foundation model by the electronic device; based on determining that execution of the PEFT model is required, performing user authentication by the electronic device; based on the user authentication being successful, obtaining, by the electronic device, at least one matrix corresponding to the PEFT model; and executing, by the electronic device, the PEFT model using the at least one matrix.

According to an aspect of the disclosure, an electronic device includes: memory storing a program or at least one instruction; and at least one processor configured to individually or collectively execute the program or the at least one instruction, wherein the program or the at least one instruction, when executed individually or collectively by the at least one processor, cause the electronic device to: obtain a prompt from a user, determine whether execution of a parameter efficient fine-tuning (PEFT) model is required to process the prompt, based on determining that execution of the PEFT model is required, execute a foundation model, based on determining that execute of the PEFT model is not required, perform user authentication, based on the user authentication being successful, obtain at least one matrix corresponding to the PEFT model, and execute the PEFT model using the at least one matrix.

According to an aspect of the disclosure, a method of processing a user request by an electronic device using a parameter efficient fine-tuning (PEFT) model includes: obtaining, by the electronic device, a prompt from a user; determining, by the electronic device, whether execution of the PEFT model is required to process the prompt; based on determining that execution of the PEFT model is not required, executing a foundation model by the electronic device; based on determining that execution of the PEFT model is required, performing user authentication by the electronic device; based on the user authentication being successful, obtaining, by the electronic device, at least one matrix corresponding to the PEFT model by generating, a Query Key Value/Weight (QKV/W) matrix and storing the QKV/W matrix in a cache memory of the electronic device and providing the QKV/W matrix to the PEFT model; and executing, by the electronic device, the PEFT model using the at least one matrix.

### BRIEF DESCRIPTION OF DRAWINGS

The above and other aspects and features of certain embodiments of the present disclosure will be more apparent from the following description taken in conjunction with the accompanying drawings, in which:
FIG. 1 is a diagram illustrating a process of fine-tuning a foundation model using a parameter efficient fine-tuning (PEFT) technique;
FIG. 2 is a diagram illustrating a process of decomposing weight matrices for generating a Query Key Value (QKV)/Weight (W) matrix into lower-dimensional matrices and then fine-tuning the lower-dimensional matrices using a low-rank adaptation (LoRA) method;
FIG. 3 is a diagram illustrating modules included in an electronic device, according to an embodiment of the disclosure;
FIG. 4 is a diagram illustrating hardware components included in an electronic device, according to an embodiment of the disclosure;
FIGS. 5 and 6 are diagrams illustrating a process by which an electronic device activates a PEFT model by generating a QKV/W matrix based on a user authentication result, according to an embodiment of the disclosure;
FIGS. 7 and 8 are diagrams illustrating a process by which an electronic device activates a PEFT model by caching weight matrices based on a user authentication result, according to an embodiment of the disclosure;
FIGS. 9 and 10 are diagrams illustrating a process by which an electronic device activates a PEFT model by caching a QKV/W matrix based on a user authentication result, according to an embodiment of the disclosure; and
FIGS. 11 to 19 are flowcharts illustrating a method of processing a user request using a PEFT model, according to embodiments of the disclosure.

### MODE FOR THE INVENTION

Throughout the disclosure, the expressions "at least one of a, b or c" and "at least one or more of a, b and c" indicates only a, only b, only c, both a and b, both a and c, both b and c, all of a, b, and c, or variations thereof.

In describing the disclosure, descriptions of technical ideas that are well known in a technical field to which the disclosure pertains and are not directly related to the disclosure will be omitted. This is to more clearly convey the essence of the disclosure without obscuring it by omitting unnecessary descriptions. Furthermore, the terms used hereinafter are defined by taking functions described in the disclosure into account and may be changed according to a user's or operator's intent, practices, or the like. Therefore, definition of the terms should be made based on the overall description of the disclosure.

For the same reason, in the accompanying drawings, some components are exaggerated, omitted, or schematically illustrated. Also, the size of each component does not entirely reflect the actual size. In the drawings, like reference numerals refer to the same or corresponding elements throughout.

Features of the disclosure and methods of accomplishing the same will be more readily appreciated by referring to the following description of embodiments of the disclosure and the accompanying drawings. However, the disclosure may be embodied in many different forms and should not be construed as being limited to the embodiments of the disclosure set forth below. Rather, the embodiments of the disclosure are provided so that the disclosure will be made thorough and complete and will fully convey the scope of the disclosure to those of ordinary skill in the art to which the disclosure pertains. An embodiment of the disclosure may be defined by the appended claims. Throughout the specification, like reference numerals refer to like elements. Furthermore, in the following description of the disclosure, related functions or configurations will not be described in detail when it is determined that they would obscure the essence of the disclosure with unnecessary detail. Furthermore, the terms used hereinafter are defined by taking functions described in the disclosure into account and may be changed according to a user's or operator's intent, practices, or the like. Therefore, definition of the terms should be made based on the overall description of the disclosure.

Terms such as "unit", "module", "member", and "block" may be embodied as hardware or software. As used herein, a plurality of "units", "modules", "members", and "blocks" may be implemented as a single component, or a single "unit", "module", "member", and "block" may include a plurality of components.

It will be understood that when an element is referred to as being "connected" with or to another element, it can be directly or indirectly connected to the other element, wherein the indirect connection may include "connection via a wireless communication network".

Also, when a part "includes" or "comprises" an element, unless there is a particular description contrary thereto, the part may further include other elements, not excluding the other elements.

It will be understood that, although the terms "first", "second", "third", etc., may be used herein to describe various elements, is the disclosure should not be limited by these terms. These terms are only used to distinguish one element from another element.

As used herein, the singular forms "a," "an" and "the" are intended to include the plural forms as well, unless the context clearly indicates otherwise.

With regard to any method or process described herein, an identification code may be used for the convenience of the description but is not intended to illustrate the order of each step or operation. Each step or operation may be implemented in an order different from the illustrated order unless the context clearly indicates otherwise. One or more steps or operations may be omitted unless the context of the disclosure clearly indicates otherwise.

The various actions, acts, blocks, steps, or the like in the flow diagrams may be performed in the order presented, in a different order, or simultaneously. Further, in one or more embodiments, some of the actions, acts, blocks, steps, or the like may be omitted, added, modified, skipped, or the like without departing from the scope of the disclosure.

In an embodiment of the disclosure, each block in flowchart illustrations and combinations of blocks in the flowchart illustrations may be performed by computer program instructions. These computer program instructions may be loaded into a processor of a general-purpose computer, a special-purpose computer, or other programmable data processing equipment, and the instructions executed by the processor of the computer or the other programmable data processing equipment may generate a unit for performing functions specified in the flowchart block(s). The computer program instructions may also be stored in a computer-executable or computer-readable memory capable of directing the computer or the other programmable data processing equipment to implement functions in a specific manner, and the instructions stored in the computer-executable or computer-readable memory are capable of producing an article of manufacture including instructions for performing the functions specified in the flowchart block(s). The computer program instructions may also be loaded into the computer or the other programmable data processing equipment.

In addition, each block of a flowchart may represent a module, segment, or portion of code that includes one or more executable instructions for executing specified logical function(s). In an embodiment of the disclosure, functions mentioned in blocks may occur out of order. For example, two blocks illustrated in succession may be executed substantially simultaneously, or the blocks may sometimes be executed in reverse order depending on functions corresponding thereto.

As used in an embodiment of the disclosure, the term "...unit" refers to a software element or a hardware element such as a field-programmable gate array (FPGA) or an application-specific integrated circuit (ASIC), and may perform a predetermined function. However, the term "...unit" is not limited to software or hardware. The "...unit" may be configured to be in an addressable storage medium or configured to operate one or more processors. In an embodiment of the disclosure, the term "...unit" may include elements such as software elements, object-oriented software elements, class elements, and task elements, processes, functions, attributes, procedures, sub-routines, segments of program code, drivers, firmware, micro-codes, circuits, data, a database, data structures, tables, arrays, and parameters. Functions provided by a specific element or a specific "...unit" may be combined to reduce the number of elements or may be further divided into additional elements. In addition, in an embodiment of the disclosure, a "...unit" may include one or more processors.

Hereinafter, the meaning of the terms used herein is described.

The term "foundation model" may refer to a model that can be used universally across various tasks by being trained using a large-scale dataset. Furthermore, the term "pre-trained model" may refer to a model that has already learned general knowledge or patterns by using a large-scale dataset. In the disclosure, the term "foundation model" and the term "pre-trained model" may be used interchangeably, and they may be trained as models adapted for specific tasks via fine-tuning.

The term "parameter efficient fine-tuning (PEFT) model" may refer to a model that has been fine-tuned using a PEFT technique. Similarly, a "low-rank adaptation (LoRA) model" may refer to a model that has been fine-tuned using a LoRA technique. The PEFT technique is one of the techniques for performing fine-tuning and is an efficient technique capable of reducing computational resources and processing time by updating only some parameters of a pre-trained model instead of updating all parameters thereof. Terms such as "personalized model" or "user-specific AI model" may be used instead of "PEFT model".

A "PEFT layer" may refer to a layer added as a result of performing fine-tuning of a foundation model using a PEFT technique. In other words, the PEFT layer may refer to an additional layer that the PEFT model includes in comparison to the foundation model. The PEFT layer may include additional parameters learned during fine-tuning.

To summarize a relationship between the PEFT model and the PEFT layer, the PEFT model is a result of adding the PEFT layer to the foundation model.

The term "Query Key Value (QKV) matrix" may be a concept that encompasses all of a Q matrix, a K matrix, and a V matrix used in an attention mechanism. A QKV matrix may be obtained by applying a weight matrix to an input embedding.

The term "weight matrix" may refer to a matrix for generating a QKV matrix. A weight matrix may be generated (updated) in the process of fine-tuning a foundation model. A QKV matrix may be generated by multiplying an input embedding by a weight matrix. For example, a Q matrix may be generated by multiplying an input embedding X by a weight matrix W_{Q} for queries, and similarly, the remaining K and V matrices may be respectively obtained by multiplying the input embedding X by a weight matrix W_{K} for keys and a weight matrix W_{V} for values.

A "QKV matrix" and a "weight matrix" may be combined and collectively referred to as a "QKV/Weight (W) matrix".

A "prompt" is a sentence or keyword for interaction between a user and a model, and may be text for a user to provide a question or give a command to the model. In other words, the prompt may be a text or other forms of input that instruct the model about what kind of output to generate. As used in the disclosure, "executing a prompt" or "executing (or running) a generative model according to a prompt" may refer to an operation in which the generative model performs a task according to a request in the prompt, i.e., an operation in which, in response to the prompt being input to the generative model, the generative model performs an operation to generate a result corresponding to the prompt. The prompt may include "intent" and "details", as described in detail below. Terms such as "instruction" may also be used instead of "prompt".

"Input data" may refer to actual data that a model needs to process or analyze. The input data may be in various forms, such as text, images, and audio. For example, when a user requests a translation by inputting a prompt "Translate the following sentence into Korean," to the model, the text to be translated may be the input data. Alternatively, for example, when the user requests editing of an image by inputting a prompt "Erase the clouds in the sky," the image to be edited may be the input data. Terms such as "source data" or "input values" may also be used instead of "input data".

An "input sequence" is an input that is actually fed into a model, and may refer to a complete input that the model needs to process. In other words, the input sequence may refer to the entire data that is transmitted to an input layer of the model, and may include not only a text prompt but also other forms of input data such as images, audio, etc. In other words, the input sequence may be a combination of the prompt and the input data. For example, an input sequence for a text-to-image model may include image data to be edited and a prompt (text) instructing editing of the image data.

As a specific example, when the user inputs a sentence to be translated, "He always inspires me", as input data to the model, along with a prompt "Translate the following sentence into Korean", the input sequence may be "Translate the following sentence into Korean. He always inspires me." Alternatively, when the user inputs, as input data, an image to be edited with a prompt "Erase the clouds in the sky", the input sequence may be a combination of "Erase the clouds in the sky in the photo" and the image. Alternatively, in this case, the image, which is the input data, may be converted into text, and the input sequence may be a combination of the text and the prompt. Terms such as "complete input," "input stream," or "input series" may also be used instead of "input sequence".

An "input embedding" may refer to an embedding matrix corresponding to an input sequence. In other words, an embedding matrix obtained as a result of performing an embedding transformation on tokens included in the input sequence may be the input embedding. The input sequence is an entire input to the model, and may include only a prompt in the form of text entered by the user, or may include the prompt and data such as an image or audio that is input along with the prompt.

Hereinafter, embodiments of the disclosure are described in detail with reference to the drawings.

The disclosure relates to a method of processing a user request using a PEFT model and an electronic device for performing the method, and embodiments of the disclosure provide an enhanced security by encrypting (or locking) a component required to execute the PEFT model.

The electronic device according to the embodiments of the disclosure causes the PEFT model to be executed (or run) only when user authentication is successful, in order to increase the security of the user's personal data (e.g., information related to privacy) and a structure of the model, as described in detail below.

The PEFT model may reflect the user's personal data. The PEFT model may include a PEFT layer in addition to layers of a foundation model (a pre-trained model), and parameters included in the PEFT layer may be generated (updated) by reflecting the user's personal data during the process of fine-tuning the foundation model.

The user's personal data stored in the electronic device may also be used during a process of executing the PEFT model. For example, the PEFT layer included in the PEFT model may generate a QKV/W matrix using the user's personal data.

In this way, because the user's personal data may be already reflected in the PEFT model, or used in the process of executing the PEFT model, the electronic device according to the embodiments of the disclosure may enhance data security by causing the PEFT model to be executed (or run) only when user authentication is successful.

Features of the embodiments of the disclosure are briefly summarized as follows:

### (A) Determining whether execution of a PEFT model is required to process a user's request:

When the execution of the PEFT model is required, the electronic device performs user authentication.

When the execution of the PEFT model is not required, the electronic device processes the user's request using a foundation model.

### (B) When the user authentication is successful, processing the user's request by executing the PEFT model:

The electronic device encrypts a component required for executing the PEFT model, and when the user authentication is successful, decrypts the component to execute the PEFT model.

For example, a component for generating a QKV/W matrix required to execute the PEFT model is waiting in a locked state, and when user authentication is successful, the component is unlocked to generate the QKV/W matrix.

Alternatively, for example, weight matrices corresponding to the PEFT model, i.e., weight matrices for generating a QKV matrix required to execute the PEFT model, are encrypted and stored in a flash memory, and when user authentication is successful, the encrypted weight matrices are decrypted, stored in a cache memory, and used to generate the QKV matrix.

### (C) When the user authentication fails, processing the user's request by executing a dummy model:

When the user authentication fails, the electronic device generates random weight matrices based on a random seed, and generates a QKV matrix using the generated weight matrices (in this case, the PEFT model operates as a dummy model).

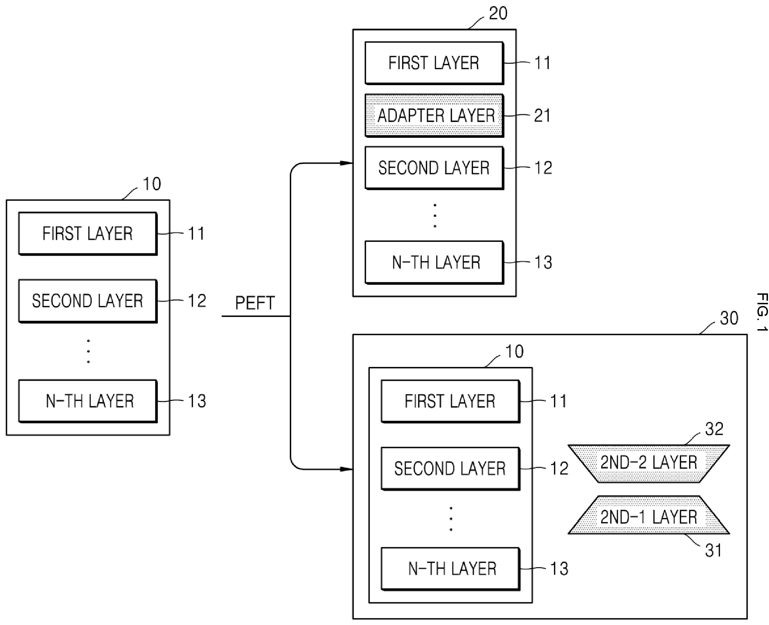

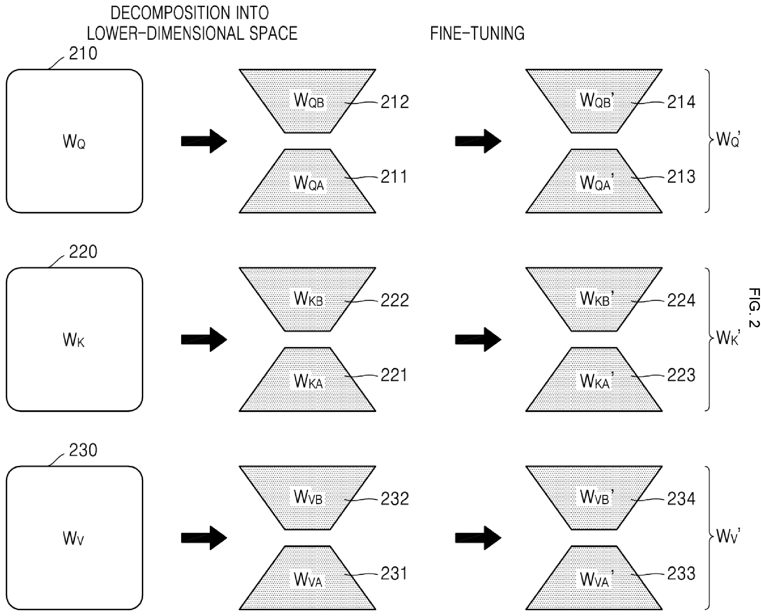

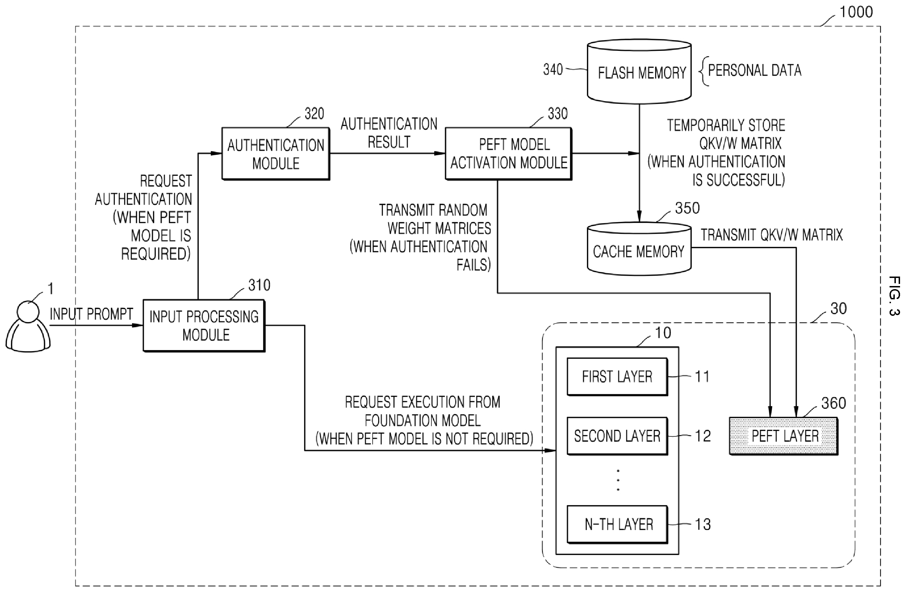

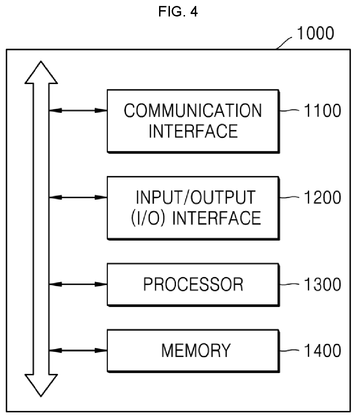

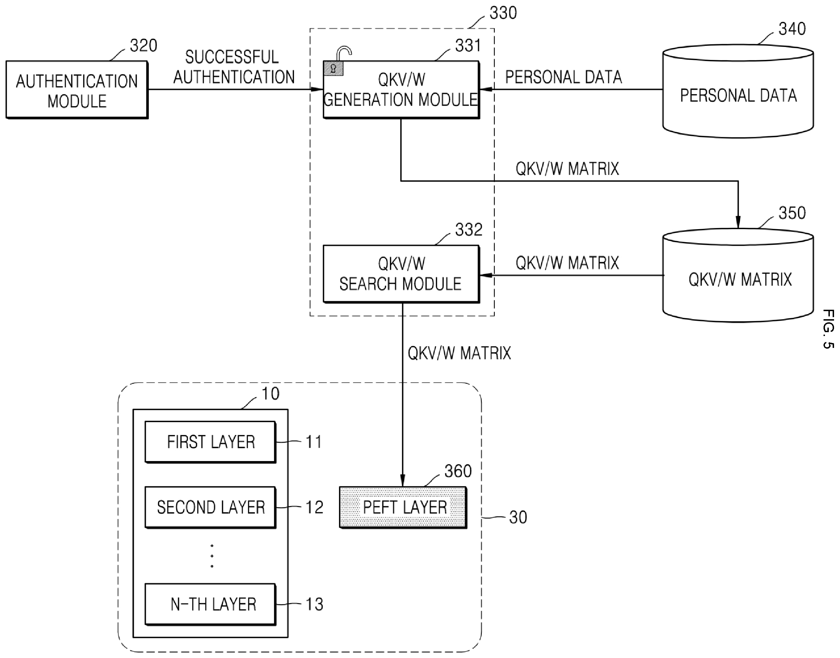

Before describing specific embodiments of the disclosure, a method of fine-tuning a foundation model according to a PEFT technique and additional layers generated as a result of the fine-tuning are described with reference to FIGS. 1 and 2. Then, a configuration and overall operation of an electronic device according to an embodiment of the disclosure are described with reference to FIGS. 3 and 4, and specific embodiments of the disclosure are described with reference to FIGS. 5 to 8.

### 1. A method of performing fine-tuning according to a PEFT technique (FIGS. 1 and 2)

FIG. 1 is a diagram illustrating a process of fine-tuning a foundation model using a PEFT technique.

Referring to FIG. 1, a foundation model 10 may include N layers, i.e., first to N-th layers 11-13, and each of the first to N-th layers 11-13 may include a weight matrix. For example, at least one of the first layer 11, the second layer 12, ..., or the N-th layer 13 may include weight matrices W_{Q}, W_{K}, and W_{V} for generating a QKV matrix.

As described above, the foundation model 10 may be a neural network model pre-trained using a general dataset. A user may fine-tune the foundation model 10 to be suitable for performing a specific task, and use a PEFT technique to efficiently perform the fine tuning.

The PEFT technique is a method of fine-tuning a pre-trained large-scale model to suit a specific task by adjusting (or updating) only some parameters in the pre-trained model rather than adjusting all the parameters thereof. In other words, the PEFT method is a fine-tuning method that fixes the parameters of the pre-trained large model, adds a new trainable neural network structure, and updates only the added part.

In a case where the foundation model 10 is a large-scale model, a material amount of computational resources and memory are required for performing fine-tuning to update all the parameters included in the foundation model 10, and a PEFT technique is been proposed to overcome this limitation.

When the foundation model 10 is fine-tuned according to a PEFT technique, a first PEFT model 20 or a second PEFT model 30 may be generated. There are various types of PEFT techniques, such as an adapter tuning method, a LoRA method, a prefix tuning method, a prompt tuning method, etc. In the embodiment illustrated in FIG. 1, it is assumed that the first PEFT model 20 is generated using the adapter tuning method and the second PEFT model 30 is generated using the LoRA method.

An adapter tuning method involves adding a small network (an adapter) to an existing model (a foundation model) and training only parameters of the added adapter while keeping parameters of the existing model unchanged.

Referring to FIG. 1, an adapter layer 21 is added between the first layer 11 and the second layer 12 of the first PEFT model 20 generated using the adapter tuning method. According to the adapter tuning method, only parameters of the adapter layer 21 may be updated, while the parameters of the first to N-th layers 11, 12, and 13 of the existing foundation model 10 are kept frozen.

According to an embodiment of the disclosure, the adapter layer 21 may include weight matrices for generating a QKV matrix required to execute the first PEFT model 20.

A LoRA method is a method that involves decomposing high-dimensional weight matrices included in layers of an existing model (a foundation model) into lower-dimensional ones and training the decomposed lower-dimensional weight matrices. That is, according to the LoRA method, the parameters of the existing model (the foundation model) are frozen, and matrices with low ranks are newly defined so that only parameters of the corresponding matrices are updated.

When fine-tuning is performed according to the LoRA method, layers generated by decomposing at least one of the first to N-th layers 11, 12, and 13 included in the foundation model 10 into a lower-dimensional space may be added. Referring to FIG. 1, the second PEFT model 30 may include a 2nd-1 layer 31 and a 2nd-2 layer 32 generated by decomposing the second layer 12 of the foundation model 10 into a lower-dimensional space. Like the second layer 12, the other layers 11 and 13 included in the foundation model 10 may be decomposed into a lower-dimensional space and included in the second PEFT model 30. According to the LoRA method, only parameters of the 2nd-1 layer 31 and the 2nd-2 layer 32 may be updated, while the parameters of the first to N-th layers 11, 12, and 13 of the existing foundation model 10 are kept frozen.

According to an embodiment of the disclosure, the 2nd-1 layer 31 and the 2nd-2 layer 32 may include weight matrices for generating a QKV matrix required to execute the second PEFT model 30. For example, the second layer 12 may include weight matrices W_{Q}, W_{K}, W_{V} for generating a QKV matrix, and the 2nd-1 layer 31 and the 2nd-2 layer 32 may include matrices obtained by decomposing each of the weight matrices W_{Q}, W_{K}, and W_{V} into lower-dimensional matrices. This is described in detail with reference to FIG. 2.

FIG. 2 is a diagram illustrating a process of decomposing weight matrices for generating a QKV matrix into lower-dimensional matrices and then fine-tuning the lower-dimensional matrices using a LoRA method.

FIG. 2 illustrates weight matrices W_{Q} 210, W_{K} 220, and W_{V} 230 for generating a QKV matrix. The weight matrices W_{Q} 210, W_{K} 220, and W_{V} 230 may be included in at least one of the first layer 11, the second layer 12, ..., or the N-th layer 13 of the foundation model 10.

Referring to FIG. 2, each of the weight matrices W_{Q} 210, W_{K} 220, and W_{V} 230 for generating the QKV matrix may be decomposed into lower-dimensional matrices. The weight matrix W_{Q} 210 for generating the Q matrix may be decomposed into two lower-dimensional matrices W_{QA} 211 and W_{QB} 212. Similarly, the weight matrix W_{K} 220 for generating the K matrix may be decomposed into two lower-dimensional matrices W_{KA} 221 and W_{KB} 222, and the weight matrix W_{V} 230 for generating the V matrix may be decomposed into two lower-dimensional matrices W_{VA} 231 and W_{VB} 232.

When fine-tuning is performed on a model according to a LoRA method, only the decomposed lower-dimensional matrices W_{QA} 211, W_{QB} 212, W_{KA} 221, W_{KB} 222, W_{VA} 231, and W_{VB} 232 may be updated, while the weight matrices W_{Q} 210, W_{K} 220, and W_{V} 230 included in an existing model (a foundation model) are kept frozen.

The lower-dimensional matrices updated as a result of the fine-tuning are respectively denoted by W_{QA}' 213, W_{QB}' 214, W_{KA}' 223, W_{KB}' 224, W_{VA}' 233, and W_{VB}' 234. A product of W_{QA}' 213 and W_{QB}' 214 is denoted by W_{Q}', a product of W_{KA'} 223 and W_{KB}' 224 is denoted by W_{K}', and a product of W_{VA}' 233 and W_{VB}' 234 is denoted by W_{V}'.

W_{Q}', W_{K}', and W_{V}' may be weight matrices corresponding to a PEFT model, and may be used in the generation of a QKV matrix, together with the weight matrices W_{Q} 210, W_{K} 220, and W_{V} 230 in the foundation model. For example, the QKV matrix may be generated by applying matrices, which are obtained by respectively adding W_{Q}', W_{K}', and W_{V}' to W_{Q} 210, W_{K} 220, and W_{V} 230, to an input embedding.

According to an embodiment of the disclosure, a QKV/W generation module, which is a generative model (e.g., a language model) trained in the process of performing fine-tuning, may generate a QKV/W matrix. For example, by learning QKV/W matrices generated in the process of fine-tuning a foundation model to a PEFT model, the generative model (the QKV/W generation module) may generate a QKV/W matrix required to execute the PEFT model. The QKV/W generation module may be encrypted and then decrypted when user authentication is successful to generate a QKV/W matrix.

According to an embodiment of the disclosure, the updated weight matrices W_{Q}', W_{K}' and W_{V}' obtained by performing fine-tuning on the foundation model according to the LoRA method may be encrypted and then decrypted and used when executing the PEFT model. A detailed process is described below with reference to FIGS. 3, 5 and 6.

### 2. Descriptions of a configuration and overall operation of an electronic device running the PEFT model (FIGS. 3 and 4)

FIG. 3 is a diagram illustrating modules included in an electronic device, according to an embodiment of the disclosure. Referring to FIG. 3, an electronic device 1000 according to an embodiment of the disclosure may include an input processing module 310, an authentication module 320, a PEFT model activation module 330, a flash memory 340, and a cache memory 350. In addition, the electronic device 1000 may include a PEFT model 30, and the PEFT model 30 may include a foundation model 10 and a PEFT layer 360.

The components included in the electronic device 1000 of FIG. 3, i.e., the PEFT model 30, the input processing module 310, the authentication module 320, the PEFT model activation module 330, the flash memory 340, and the cache memory 350, are classified based on their functions or roles. The components of the electronic device 1000 of FIG. 3, i.e., the PEFT model 30 to the cache memory 350, may be software components implemented by a processor 1300 of the electronic device 1000 executing a program stored in the memory 1400, as described below with reference to FIG. 4, or may also be virtual components for which no actual matching hardware devices exist. In other words, operations performed by the processor 1300 of the electronic device 1000 executing a program or instruction stored in the memory 1400 may be classified into a plurality of groups by function or purpose, and entities that perform the operations respectively included in the plurality of groups may be represented as the components illustrated FIG. 3, i.e., the PEFT model 30 to the cache memory 350. Accordingly, the operations described as being performed by the components of the electronic device 1000 of FIG. 3, i.e., the PEFT model 30 to the cache memory 350, may be considered as actually being performed by the processor 1300 of the electronic device 1000 executing the program or instruction stored in the memory 1400.

Although FIG. 3 shows that one electronic device 1000 includes all of the components, i.e., the PEFT model 30 to the cache memory 350, the electronic device 1000 is not limited thereto, and at least some of the components may be implemented to be included in a separate device, or one component may be implemented to be included in another component. In this way, according to an embodiment of the disclosure, the components, i.e., the PEFT model 30 to the cache memory 350, included in the electronic device 1000 may be hardware components or software components, and the electronic device 1000 may be implemented in the form of various electronic devices (e.g., one electronic device or a combination of two or more electronic devices).

According to an embodiment of the disclosure, the electronic device 1000 may be a user's terminal (e.g. a smartphone, a laptop, a desktop, etc.), and may also be a server that performs communication with the user's terminal, but the disclosure is not limited thereto.

The input processing module 310 is a component for determining a model to be executed based on an input by a user 1. The electronic device 1000 may receive, from the user 1, a prompt requesting execution of a specific function (e.g. an AI function) via an input/output (I/O) interface 1200 as described below with reference to FIG. 4. For example, the electronic device 1000 may receive a prompt in the form of text from the user 1 via a touch screen, or receive a prompt in the form of voice from the user 1 via a microphone. In addition, the electronic device 1000 may obtain the prompt from the user 1 in various other ways.

The input processing module 310 may determine whether the use of the PEFT model 30 is required to perform a task according to the prompt input by the user 1. In other words, the input processing module 310 may determine whether the use of the PEFT model 30 is required to process the prompt obtained from the user 1. For example, the input processing module 310 may determine whether the use of the PEFT model 30 is required based on the prompt obtained from the user 1. Alternatively, for example, the user 1 may request the use of the PEFT model 30 when inputting the prompt, and the input processing module 310 may determine that the use of the PEFT model 30 is required based on such a request.

The user 1 may store a plurality of PEFT models in the electronic device 1000 in advance and use them depending on a purpose. Although FIG. 3 shows that the electronic device 1000 includes one PEFT model 30, the electronic device 1000 may further include one or more PEFT models, and the input processing module 310 may determine which of the plurality of PEFT models is required to process the prompt from the user 1.

When the input processing module 310 determines that the PEFT model 30 is not required to process the prompt from the user 1, the input processing module 310 may request the foundation model 10 to execute a function requested by the user 1. That is, the input processing module 310 may pass an input embedding generated based on the prompt from the user 1 through only the first to N-th layers 11, 12, and 13 of the foundation model 10, so that computations may be performed.

As described above with reference to FIGS. 1 and 2, when fine-tuning is performed on the foundation model 10 according to a PEFT technique, a PEFT model may be generated in such a way that new layers (PEFT layers) are added while the first to N-th layers 11, 12, and 13 of the foundation model 10 remain unchanged. Thus, the input processing module 310 may cause the input embedding to be processed by using only the first to N-th layers 11, 12, and 13 of the foundation model 10, excluding the PEFT layer 360.

When determining that the PEFT model 30 is required to process the prompt from the user 1, the input processing module 310 may request the authentication module 320 to perform user authentication. According to an embodiment of the disclosure, the electronic device 1000 may execute (or run) the PEFT model 30 only when it is determined that the user 1 has the authority to execute (or run) the PEFT model 30. The input processing module 310 may request authentication from the authentication module 320 to verify whether the user 1 has the authority to execute the PEFT model 30.

The authentication module 320 is a component for performing user authentication. The authentication module 320 may perform authentication on the user 1 to verify whether the user 1 has the authority to execute the PEFT model 30.

According to an embodiment of the disclosure, the authentication for verifying whether the user 1 has the authority to execute the PEFT model 30 may be performed in a different manner than authentication for use of the electronic device 1000. This will be described in detail using a first authentication method (e.g., an authentication method using an account identification (ID), a password, etc.), which has relatively low security, and a second authentication method (e.g., a biometric authentication method), which has relatively high security. Various authentication methods may be used as the first authentication method and the second authentication method.

When the user 1 starts using the electronic device 1000 and unlocks the electronic device 1000 according to the first authentication method, the authentication module 320 may additionally perform authentication on the user 1 according to the second authentication method when the execution of the PEFT model 30 is required.

However, when the user 1 starts using the electronic device 1000 and unlocks the electronic device 1000 according to the second authentication method, the authentication module 320 may determine that the user 1 has the authority to execute the PEFT model 30 without performing additional authentication thereon (i.e., the authentication module 320 may transmit (i.e., provide) an authentication result as "successful" to the PEFT model activation module 330).

The PEFT model activation module 330 is a component for activating the PEFT model 30 according to an authentication result. When receiving an authentication result for the user 1 from the authentication module 320, the PEFT model activation module 330 determines whether to activate the PEFT model 30 based on the authentication result.

When authentication of the user 1 is successful, the PEFT model activation module 330 may perform a process of executing the PEFT model 30.

According to an embodiment of the disclosure, the PEFT model activation module 330 may generate a QKV/W matrix required to execute the PEFT model 30. Because a QKV/W generation module included in the PEFT model activation module 330 learns QKV/W matrices generated during fine-tuning to the PEFT model 30 as described above, the QKV/W generation module may generate a QKV/W matrix from the prompt input by the user 1. In detail, in the process of fine-tuning the foundation model 10 using a PEFT technique, a generative model may be trained to generate a QKV/W matrix required to execute the PEFT model 30, and the trained generative model (the QKV/W generation module) may be included in the PEFT model activation module 330 in an encrypted state. When user authentication is successful, the generative model (the QKV/W generation module) included in the PEFT model activation module 330 may be decrypted to generate a QKV/W matrix.

The PEFT model activation module 330 may temporarily store the generated QKV/W matrix in the cache memory 350 so that the PEFT model 30 may use the QKV/W matrix. When generating the QKV/W matrix, the PEFT model activation module 330 may also use personal data of the user 1 stored in the flash memory 340. The PEFT model activation module 330 may also be implemented to be included in the PEFT model 30.

According to an embodiment of the disclosure, the flash memory 340 may store weight matrices for generating a QKV matrix, and the PEFT model activation module 330 may cache the weight matrices stored in the flash memory 340. In detail, the PEFT model activation module 330 may temporarily store, in the cache memory 350, weight matrices corresponding to the PEFT model 30, which are stored in the flash memory 340, so that the PEFT model 30 may use the weight matrices whenever the PEFT model 30 needs the weight matrices.

The weight matrices being cached may be matrices required for executing the PEFT model 30. That is, the weight matrices generated as a result of performing fine-tuning on the foundation model 10 using the PEFT technique may be stored in the flash memory 340 and cached by the PEFT model activation module 330.

According to an embodiment of the disclosure, the personal data of the user 1 may be used in the process of fine-tuning the foundation model 10 using the PEFT technique, and thus, the personal data of the user 1 may be reflected in the weight matrices corresponding to the PEFT model 30.

According to an embodiment of the disclosure, the weight matrices are encrypted and stored in the flash memory 340, decrypted by the PEFT model activation module 330, and stored in the cache memory 350 so that the weight matrices may be used by the PEFT model 30.

As described above, the weight matrices stored in the flash memory 340 may be W_{Q}', W_{K}', and W_{V}' which are matrices for generating the QKV matrix required for executing the PEFT model 30. Accordingly, the PEFT layer 360 may generate a QKV matrix using the weight matrices W_{Q}', W_{K}', and W_{V}' temporarily stored in the cache memory 350, and perform an attention mechanism using the generated QKV matrix.

Instead of the weight matrices W_{Q}', W_{K}', and W_{V}' for generating the QKV matrix, other types of weight matrices may be stored in the flash memory 340 and cached by the PEFT model activation module 330. However, the weight matrices cached by the PEFT model activation module 330 may be weight matrices corresponding to the PEFT model 30. In other words, the weight matrices cached by the PEFT model activation module 330 may be weight matrices generated as a result of the foundation model 10 being fine-tuned according to the PEFT technique.

According to an embodiment of the disclosure, the PEFT model activation module 330 may generate a QKV/W matrix based on the personal data of the user 1 stored in the flash memory 340, and cache the generated QKV/W matrix. That is, the PEFT model activation module 330 may temporarily store the generated QKV/W matrix in the cache memory 350 and allow the PEFT model 30 to use the stored QKV/W matrix whenever the PEFT model 30 needs it. The PEFT model activation module 330 may generate a QKV matrix from the personal data of the user 1 using the weight matrices W_{Q}', W_{K}', and W_{V}' stored in the flash memory 340.

The PEFT layer 360 of the PEFT model 30 may include a layer for performing an attention mechanism, and thus may perform the attention mechanism using the QKV/W matrix stored in the cache memory 350, and provide a result of performing the attention mechanism to another layer included in the PEFT layer 360, or to one of the first to N-th layers 11, 12, and 13 included in the foundation model 10.

Alternatively, a layer that is a combination of at least one of the first layer 11, the second layer 12, ..., or an N-th layer 13, which are included in the foundation model 10, with the PEFT layer 360 may perform an attention mechanism using the QKV/W matrix stored in the cache memory 350, and provide a result of the performing of the attention mechanism to another layer. In various other ways, a combination of the PEFT layer 360 and the foundation model 10 may perform an attention mechanism using the QKV/W matrix, and perform an inference based on a result of the performing of the attention mechanism.

When the authentication of the user 1 fails, the PEFT model activation module 330 may generate random weight matrices based on a random seed and provide the generated weight matrices to the PEFT layer 360.

In this way, in a case where a QKV/W matrix is not generated using the generative model (the QKV/W generation module) during fine-tuning, the effect of fine-tuning is not reflected, and the PEFT model 30 operates as a dummy model. Alternatively, when the PEFT layer 360 performs a computation (e.g., a computation for generating a QKV matrix) using random weight matrices other than weight matrices generated via fine-tuning, the effect of fine-tuning is not reflected, and the PEFT model 30 operates as a dummy model. Therefore, the security of the PEFT model 30 may be maintained.

When the processing of the prompt input by the user 1 is completed, the PEFT model activation module 330 may delete data (e.g., a QKV/W matrix, etc.) for executing the PEFT model 30, which are stored in the cache memory 350.

A specific process by which the PEFT model activation module 330 executes the PEFT model 30 according to an authentication result is described in detail below with reference to FIGS. 5 to 8.

FIG. 4 is a diagram illustrating hardware components included in an electronic device, according to an embodiment of the disclosure. Referring to FIG. 4, according to an embodiment of the disclosure, the electronic device 1000 may include a communication interface 1100, an input/output (I/O) interface 1200, the processor 1300, and the memory 1400. However, the components of the electronic device 1000 are not limited to the example described above, and the electronic device 1000 may include more or fewer components than the components stated above. Some or all of the communication interface 1100, the I/O interface 1200, the processor 1300, and the memory 1400 may be implemented in the form of a single chip.

The communication interface 1100 may be a component for transmitting and receiving signals (control commands, data, etc.) to and from an external device by wire or wirelessly, and may be implemented to include a communication chipset that supports various communication protocols. The communication interface 1100 may receive a signal from the outside and output the signal to the processor 1300, or may transmit a signal output from the processor 1300 to the outside. The electronic device 1000 may communicate with external devices via the communication interface 1100.

The I/O interface 1200 may include an input interface (e.g., a touch screen, a keyboard, a microphone, etc.) for receiving control commands or information from the user 1, and an output interface (e.g., a display panel, a speaker, etc.) for displaying results of execution of operations according to the user's commands or a status of the electronic device 1000. According to an embodiment of the disclosure, the electronic device 1000 may receive a prompt and input data from the user 1 via the I/O interface 1200, and when a task is completed, output a result of performing the task (e.g., an answer to a question included in the prompt, an image edited according to a request in the prompt, etc.) via the I/O interface 1200.

The processor 1300 may be a component that controls a series of processes to cause the electronic device 1000 to operate according to embodiments of the disclosure as described below, and may consist of one or a plurality of processors. The one or plurality of processors included in the processor 1300 may be circuitry, such as a system on chip (SoC), an integrated circuit (IC), or the like. The one or plurality of processors included in the processor 1300 may be general-purpose processors such as a central processing unit (CPU), a microprocessor unit (MPU), an application processor (AP), a digital signal processor (DSP), etc., dedicated graphics processors such as a graphics processing unit (GPU) and a vision processing unit (VPU), dedicated AI processors such as a neural processing unit (NPU), or dedicated communication processors such as a communication processor (CP). When the one or plurality of processors included in the processor 1300 are a dedicated AI processor, the corresponding AI dedicated processor may be designed with a hardware structure specialized for processing a specific AI model.

The processor 1300 may write data to the memory 1400 or read data stored in the memory 1400, and in particular, execute a program or at least one instruction stored in the memory 1400 to process data according to predefined operation rules or AI models. Thus, the processor 1300 may perform operations described according to embodiments of the disclosure as described below, and operations described in the disclosure as being performed by the electronic device 1000 or the components, i.e., the PEFT model 30 to the cache memory 350, included in the electronic device 1000 may be considered as being performed by the processor 1300 unless otherwise specified.

The memory 1400 may be a component for storing various programs or data, and may consist of a storage medium, such as read-only memory (ROM), random access memory (RAM), a hard disk, compact disc ROM (CD-ROM), a digital video disc (DVD), etc., or a combination of storage media. The memory 1400 may exist separately but may also be configured to be included in the processor 1300. The memory 1400 may consist of volatile memory, non-volatile memory, or a combination of volatile memory and non-volatile memory. The memory 1400 may store a program or at least one instruction for performing operations according to one or more embodiments of the disclosure as described below. The memory 1400 may provide stored data to the processor 1300 according to a request from the processor 1300. The memory 1400 may include the flash memory 340 and the cache memory 350, as shown in FIG. 3.

### 3. (Embodiment 1) Generating and caching a QKV/W matrix corresponding to a PEFT model

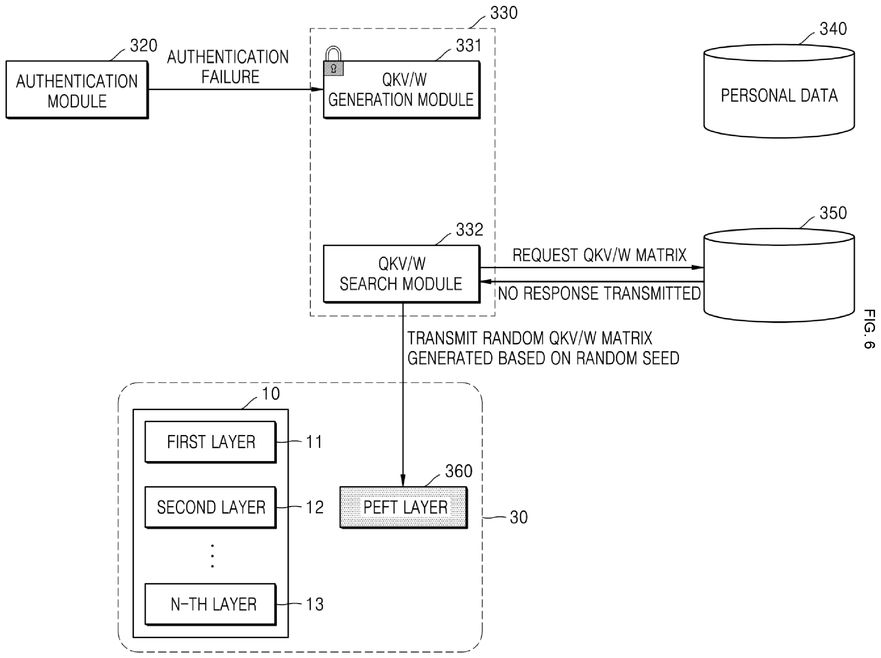

FIGS. 5 and 6 are diagrams illustrating a process by which an electronic device activates a PEFT model by generating and caching a QKV/W matrix based on a user authentication result, according to an embodiment of the disclosure. Referring to FIG. 5, the PEFT model activation module 330 may include a QKV/W generation module 331 and a QKV/W retrieval module 332. Although FIG. 5 shows that the PEFT model activation module 330 exists separately from the PEFT model 30, according to an embodiment of the disclosure, the PEFT model activation module 330 may be implemented to be included in the PEFT model 30. First, a process by which the electronic device 1000 activates the PEFT model 30 when user authentication is successful is described with reference to FIG. 5.

As described above, when execution of the PEFT model 30 is required, the authentication module 320 may perform authentication and provide an authentication result to the QKV/W generation module 331. When authentication is successful, the electronic device 1000 may unlock the QKV/W generation module 331 included in the PEFT model activation module 330. The unlocked QKV/W generation module 331 may generate a QKV/W matrix required for executing (or running) the PEFT model 30.

As described above, the QKV/W generation module 331 may be a generative model (e.g., a language model) trained in the process of fine-tuning the foundation model 10 to the PEFT model 30. The QKV/W generation module 331 may generate a QKV/W matrix required for executing the PEFT model 30 by learning QKV/W matrices generated in the process of fine-tuning the foundation model 10 to the PEFT model 30.

According to an embodiment of the disclosure, the QKV/W generation module 331 may also be included in the PEFT model 30.

According to an embodiment of the disclosure, the flash memory 340 may store personal data of a user. The QKV/W generation module 331 may obtain the personal data of the user from the flash memory 340, generate a QKV/W matrix using the personal data, and then store the generated QKV/W matrix in the cache memory 350. For example, the QKV/W generation module 331 may generate a QKV/W matrix based on a prompt input by the user and the personal data stored in the flash memory 340.

The QKV/W retrieval module 332 may obtain the QKV/W matrix stored in the cache memory 350 and provide the QKV/W matrix to the PEFT layer 360. According to an embodiment of the disclosure, the QKV/W retrieval module 332 may obtain the QKV/W matrix from the cache memory 350 and provide the QKV/W matrix to the PEFT layer 360 at a time when a computation using the QKV/W matrix is to be performed in the PEFT model 30.

The PEFT layer 360 may provide a personalized service to the user by performing a computation using the received QKV/W matrix. When the QKV/W matrix is generated, the PEFT model 30 may perform a subsequent computation process using the generated QKV/W matrix.

When processing of the user's request is completed, the QKV/W generation module 331 may delete the QKV/W matrix stored in the cache memory 350, thereby preventing the QKV/W matrix from being leaked to the outside.

Next, a process by which the electronic device 1000 operates the PEFT model 30 as a dummy model when the user authentication fails is described with reference to FIG. 6.

When the authentication module 320 performs authentication on the user and the authentication fails, the electronic device 1000 does not unlock the QKV/W generation module 331 included in the PEFT model activation module 330. The QKV/W generation module 331 in a locked state does not perform any operation, and therefore, the QKV/W matrix required for executing the PEFT model 30 is not generated.

At a time when a computation using a QKV/W matrix needs to be performed in the PEFT model 30, the QKV/W retrieval module 332 may access the cache memory 350 to search for the QKV/W matrix. However, because the QKV/W matrix is not stored in the cache memory 350, the QKV/W retrieval module 332 is not able to obtain the QKV/W matrix.

When the QKV/W retrieval module 332 fails to obtain the QKV/W matrix, the QKV/W retrieval module 332 may generate a random QKV/W matrix based on a random seed and provide the generated random QKV/W matrix to the PEFT layer 360.

The PEFT layer 360 may perform a subsequent computation process using the random QKV/W matrix received from the QKV/W retrieval module 332. In this way, the effect of fine-tuning is not reflected in the random QKV/W matrix that is not a QKV/W matrix generated by the QKV/W generation module 331 trained via fine-tuning, and therefore, the PEFT model 30 operates as a dummy model. Thus, the security of the PEFT model 30 may be maintained.

### 4. (Embodiment 2) Caching weight matrices corresponding to a PEFT model

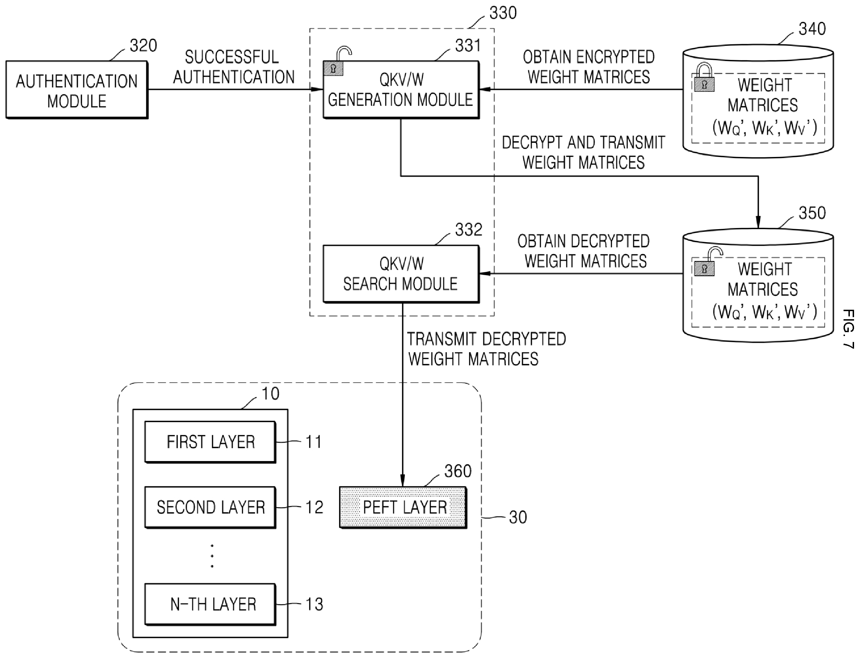

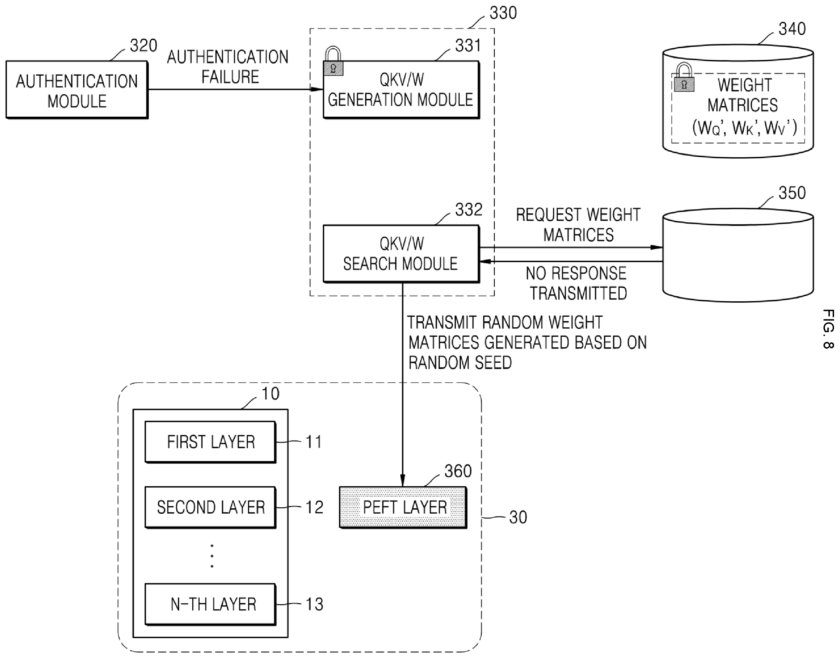

FIGS. 7 and 8 are diagrams illustrating a process by which an electronic device activates a PEFT model by caching weight matrices based on a user authentication result, according to an embodiment of the disclosure.

In the embodiment of the disclosure illustrated in FIGS. 7 and 8, the PEFT model activation module 330 may cache weight matrices W_{Q}', W_{K}' and W_{V}' for generating a QKV matrix, and names of the detailed components, i.e., the QKV/W generation module 331 and the QKV/W retrieval module 332, included in the PEFT model activation module 330 are determined accordingly; however, the PEFT model activation module 330 may also activate the PEFT model 30 by caching other types of weight matrices.

Referring to FIG. 7, the PEFT model activation module 330 may include the QKV/W generation module 331 and the QKV/W retrieval module 332. First, a process by which the electronic device 1000 activates the PEFT model 30 when user authentication is successful is described with reference to FIG. 7.

As described above, when execution of the PEFT model 30 is required, the authentication module 320 may perform authentication and provide an authentication result to the QKV/W generation module 331. When authentication is successful, the electronic device 1000 may unlock the QKV/W generation module 331 included in the PEFT model activation module 330. The unlocked QKV/W generation module 331 may obtain weight matrices stored in the flash memory 340.

According to an embodiment of the disclosure, weight matrices W_{Q}', W_{K}', and W_{V}' for generating a QKV matrix required to execute PEFT model 30 may be encrypted and stored in the flash memory 340. The QKV/W generation module 331 may obtain the encrypted weight matrices W_{Q}', W_{K}', and W_{V'} from the flash memory 340, decrypt the encrypted weight matrices W_{Q}', W_{K}', and W_{V'}, and store the decrypted weight matrices W_{Q}', W_{K}', and W_{V}' in the cache memory 350. Alternatively, the weight matrices W_{Q}', W_{K}', and W_{V}' may also be stored in the flash memory 340 in an unencrypted state and cached by the QKV/W generation module 331.

The QKV/W retrieval module 332 may obtain the decrypted weight matrices W_{Q}', W_{K}', and W_{V}' stored in the cache memory 350 and provide the decrypted weight matrices W_{Q}', W_{K}', and W_{V}' to the PEFT layer 360. According to an embodiment of the disclosure, the QKV/W retrieval module 332 may obtain the decrypted weight matrices W_{Q}', W_{K}', and W_{V}' from the cache memory 350 and provide them to the PEFT layer 360 at a time when a computation using the weight matrices W_{Q}', W_{K}', and W_{V}' is to be performed in the PEFT model 30.

The PEFT layer 360 may generate a QKV matrix using the decrypted weight matrices W_{Q}', W_{K}', and W_{V}'. In detail, the PEFT layer 360 may generate the QKV matrix by applying the weight matrices W_{Q}', W_{K}', and W_{V}' to an input embedding generated based on a prompt input by the user.

According to an embodiment of the disclosure, personal data may be stored in the flash memory 340, and the stored personal data may be used to generate the QKV matrix. For example, the electronic device 1000 may generate an input embedding based on a prompt input by the user and personal data stored in the flash memory 340, and the PEFT layer 360 may generate the QKV matrix by applying the weight matrices W_{Q}', W_{K}', and W_{V}' to the input embedding generated in this manner.

When the QKV matrix is generated, the PEFT model 30 may perform a subsequent computation process using the generated QKV matrix. According to an embodiment of the disclosure, the QKV matrix generated by the PEFT layer 360 may also be stored in the cache memory 350.

When processing of the user's request is completed, the QKV/W generation module 331 may delete the weight matrices stored in the cache memory 350, thereby preventing the weight matrices from being leaked to the outside.

Next, a process by which the electronic device 1000 operates the PEFT model 30 as a dummy model when the user authentication fails is described with reference to FIG. 8.

When the authentication module 320 performs authentication on the user and the authentication fails, the electronic device 1000 does not unlock the QKV/W generation module 331 included in the PEFT model activation module 330. The QKV/W generation module 331 in the locked state does not perform any operation, and therefore, weight matrices W_{Q}', W_{K}', and W_{V}' required to execute the PEFT model 30 remain encrypted and stored in the flash memory 340.

At a time when a computation using the weight matrices W_{Q}', W_{K}', and W_{V}' needs to be performed in the PEFT model 30, the QKV/W retrieval module 332 may access the cache memory 350 to search for the weight matrices W_{Q}', W_{K}', and W_{V}'. However, because the weight matrices W_{Q}', W_{K}', and W_{V}' are not stored in the cache memory 350, the QKV/W retrieval module 332 is not able to obtain the weight matrices W_{Q}', W_{K}', and W_{V}'.

When the QKV/W retrieval module 332 fails to obtain the weight matrices W_{Q}', W_{K}', and W_{V}', the QKV/W retrieval module 332 may generate random weight matrices based on a random seed and provide the generated random weight matrices to the PEFT layer 360.

The PEFT layer 360 may generate a QKV matrix by applying, to an input embedding, the random weight matrices received from the QKV/W retrieval module 332, and the PEFT model 30 may perform a subsequent computation process using the generated QKV matrix. In this way, when the PEFT layer 360 generates the QKV matrix using the random weight matrices rather than weight matrices generated via fine-tuning, the effect of fine-tuning is not reflected in the QKV matrix, and therefore the PEFT model 30 operates as a dummy model. Thus, the security of the PEFT model 30 may be maintained.

### 5. (Embodiment 3) Caching QKV matrix generated using personal data

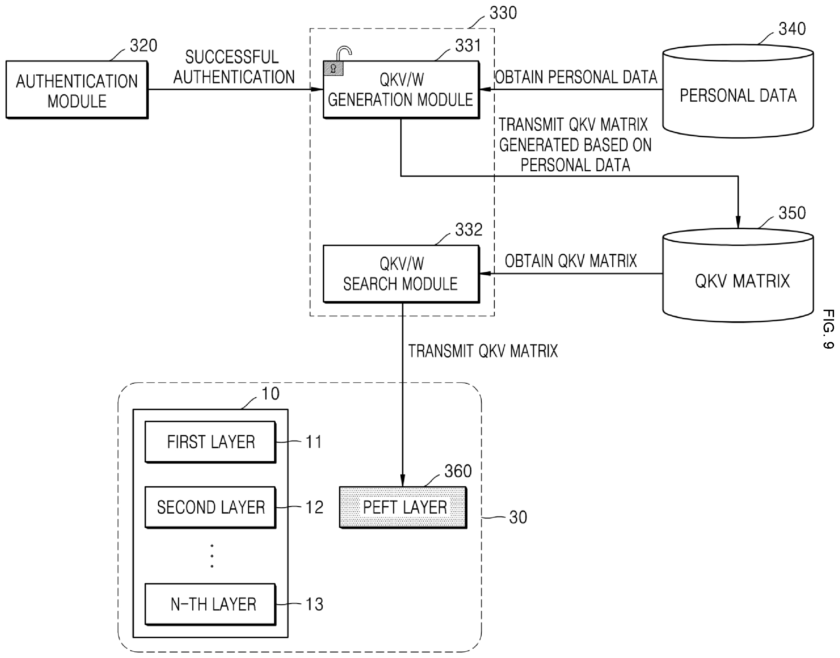

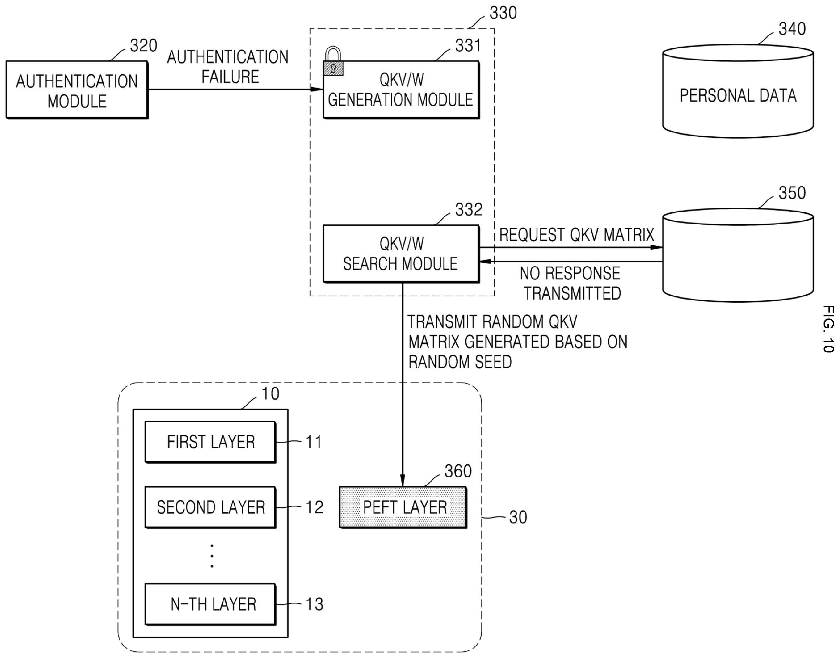

FIGS. 9 and 10 are diagrams illustrating a process by which an electronic device activates a PEFT model by caching a QKV/W matrix based on a user authentication result, according to an embodiment of the disclosure.

First, a process by which the electronic device 1000 activates the PEFT model 30 when user authentication is successful is described with reference to FIG. 9.

When the authentication module 320 performs authentication on the user and the authentication is successful, the electronic device 1000 may unlock the QKV/W generation module 331 included in the PEFT model activation module 330.

The unlocked QKV/W generation module 331 may obtain the user's personal data stored in the flash memory 340, and generate a QKV matrix using the obtained personal data. A specific process by which the QKV/W generation module 331 generates the QKV matrix using the personal data is as follows.

The electronic device 1000 may generate an input embedding, based on a prompt input by the user and the personal data stored in the flash memory 340. First, the electronic device 1000 may generate an input sequence by combining the prompt and the personal data. For example, when the prompt input by the user and the personal data stored in the flash memory 340 are as follows, the electronic device 1000 may generate an input sequence by combining the prompt with the personal data.

Prompt: "Send a greeting message to my friends among the people saved in my contacts."

Personal data: Phone numbers and group information of the people saved in the contacts

Input sequence: Send a greeting message to the phone numbers of the people included in a friend group in the contacts

When the input sequence is generated, the electronic device 1000 may obtain an embedding matrix by performing an embedding transformation on the input sequence, and the embedding matrix obtained in this way corresponds to the input embedding.

The QKV/W generation module 331 may generate a QKV matrix by applying the prestored weight matrices W_{Q}', W_{K}', and W_{V}' to the input embedding, and store the generated QKV matrix in the cache memory 350. In this case, the weight matrices W_{Q}', W_{K}', and W_{V}' may be matrices generated as a result of performing fine-tuning on the foundation model 10 using the PEFT technique, and may be stored in the flash memory 340.

The QKV/W retrieval module 332 may obtain the QKV matrix stored in the cache memory 350 and provide the QKV matrix to the PEFT layer 360. According to an embodiment of the disclosure, the QKV/W retrieval module 332 may obtain the QKV matrix from the cache memory 350 and provide the QKV matrix to the PEFT layer 360 at a time when a computation using the QKV matrix is to be performed in the PEFT model 30. The PEFT model 30 may perform a subsequent computation process using the received QKV matrix.

When processing of the user's request is completed, the QKV/W generation module 331 may maintain security by deleting the QKV matrix stored in the cache memory 350.

Next, a process by which the electronic device 1000 operates the PEFT model 30 as a dummy model when the user authentication fails is described with reference to FIG. 10.

When the authentication module 320 performs authentication on the user and the authentication fails, the electronic device 1000 does not unlock the QKV/W generation module 331 included in the PEFT model activation module 330. The QKV/W generation module 331 in a locked state does not perform any operation, and therefore, the QKV/W matrix required for executing the PEFT model 30 is not generated.

At a time when a computation using a QKV/W matrix needs to be performed in the PEFT model 30, the QKV/W retrieval module 332 may access the cache memory 350 to search for the QKV/W matrix. However, because the QKV/W matrix is not stored in the cache memory 350, the QKV/W retrieval module 332 is not able to obtain the QKV/W matrix.

When the QKV/W retrieval module 332 fails to obtain the QKV matrix, the QKV/W retrieval module 332 may generate a random QKV matrix based on a random seed and provide the generated random QKV matrix to the PEFT layer 360.

The PEFT model 30 may perform a subsequent computation process using the random QKV matrix received from the QKV/W retrieval module 332. In this way, the randomly generated QKV matrix does not reflect the effect of fine-tuning or personal data, and therefore the PEFT model 30 operates as a dummy model. Thus, the security of the user's personal data and the PEFT model 30 may be maintained.

### 6. Describing a process with reference to flowcharts

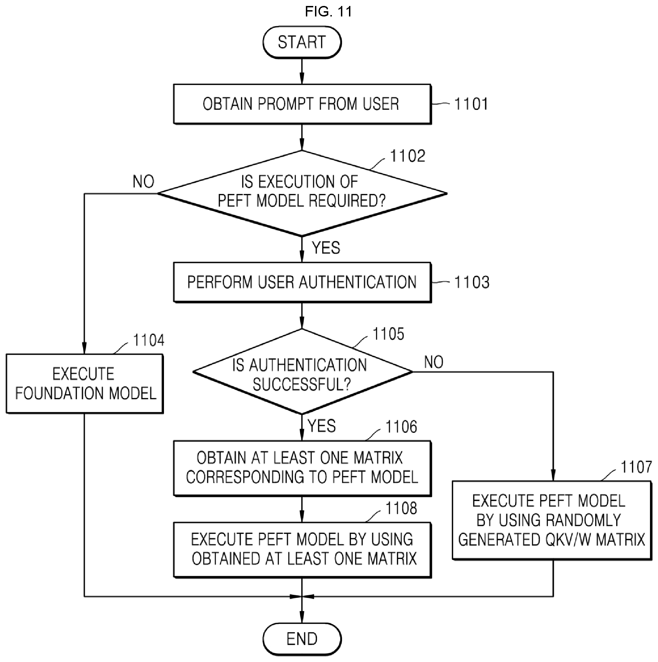

FIGS. 11 to 19 are flowcharts illustrating a method of processing a user request using a PEFT model, according to embodiments of the disclosure. Hereinafter, a method of processing a user request using a PEFT model, according to embodiments of the disclosure, is described with reference to FIGS. 11 to 19. Because operations included in the flowcharts of FIGS. 11 to 19 are performed by the electronic device 1000 of FIGS. 3 and 4, descriptions already provided with reference to FIGS. 3 to 10 may be equally applicable to FIGS. 11 to 19 even when omitted below.

Referring to FIG. 11, in operation 1101, a process may begin when the electronic device 1000 obtains a prompt from a user. In operation 1102, the electronic device 1000 may determine whether execution (or running) of a PEFT model is required to perform a task according to the prompt input by the user.

When it is determined that the execution of the PEFT model is not required, the electronic device 1000 may perform operation 1104 to execute a foundation model. In other words, the electronic device 1000 may perform the task requested by the user using only the foundation model that is a pretrained model without using the PEFT model to which the foundation model is fine-tuned.

When it is determined that the execution (running) of the PEFT model is required, the electronic device 1000 may perform operation 1103 to perform user authentication. The electronic device 1000 may perform authentication on the user to verify whether the user has an authority to execute the PEFT model.

According to an embodiment of the disclosure, the authentication for verifying whether the user has the authority to execute the PEFT model may be performed in a different manner than authentication for use of the electronic device 1000. For example, in a case where the user starts using the electronic device 1000 and unlocks the electronic device 1000 according to a first authentication method (e.g., authentication via a password), the electronic device 1000 may additionally perform authentication on the user according to a second authentication method (e.g., biometric authentication) when the execution of the PEFT model is required. In this case, the second authentication method may have higher security than the first authentication method. However, when the user starts using the electronic device 1000 and unlocks the electronic device 1000 according to the second authentication method, the electronic device 1000 may determine that the user has the authority to execute the PEFT model without performing additional authentication thereon.

In operation 1105, the electronic device 1000 may determine whether the authentication is successful.

When the authentication is successful, the electronic device 1000 may perform operation 1106 to obtain at least one matrix corresponding to the PEFT model. According to an embodiment of the disclosure, the electronic device 1000 may generate a QKV/W matrix, which is required to execute the PEFT model, using a generative model (a QKV/W generation module) trained in the process of performing fine-tuning to the PEFT model. The generative model is encrypted and then decrypted when the user authentication is successful to generate the QKV/W matrix. Furthermore, according to an embodiment of the disclosure, the electronic device 1000 may decrypt weight matrices for generating the QKV matrix. That is, in operation 1106, the electronic device 1000 may decrypt a component required for executing the PEFT model.

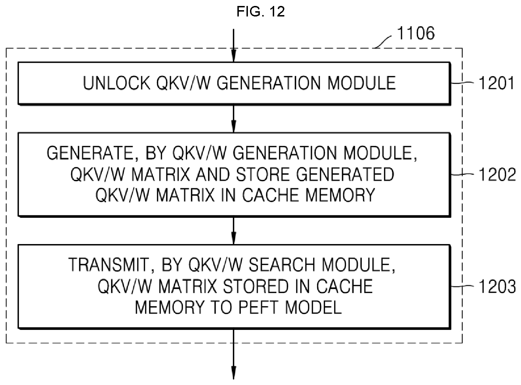

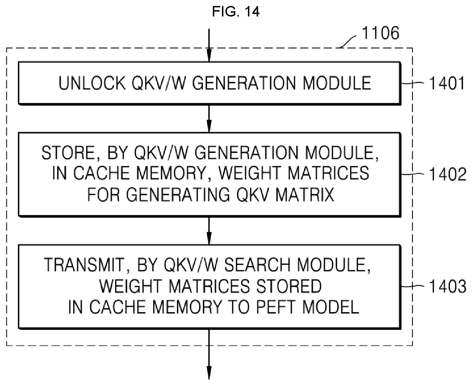

Detailed operations included in operation 1106 are illustrated in FIGS. 12 and 14.

Referring to FIG. 12, in operation 1201, the electronic device 1000 may unlock the QKV/W generation module. In this case, the QKV/W generation module may be a generative model trained using QKV/W matrices generated in the process of fine-tuning the foundation model to the PEFT model.

In operation 1202, the unlocked QKV/W generation module may generate a QKV/W matrix and store the generated QKV/W matrix in a cache memory.

In operation 1203, a QKV/W retrieval module of the electronic device 1000 may provide, to the PEFT model, the QKV/W matrix stored in the cache memory.

Referring to FIG. 14, in operation 1401, the electronic device 1000 may unlock the QKV/W generation module.

In operation 1402, the unlocked QKV/W generation module may store, in the cache memory, weight matrices for generating a QKV matrix. In this case, the weight matrices may be weight matrices generated as a result of fine-tuning the pretrained foundation model according to a PEFT technique.

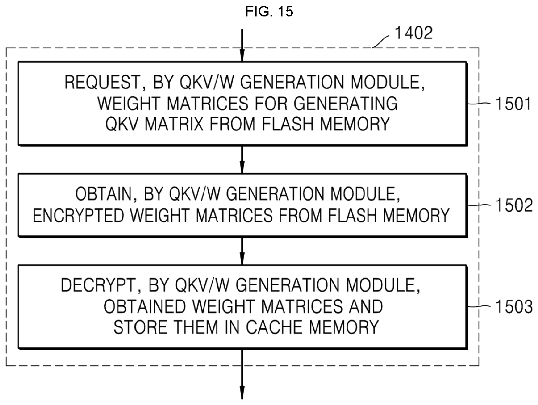

Detailed operations included in operation 1402 are illustrated in FIG. 15. Referring to FIG. 15, the QKV/W generation module of the electronic device 1000 may request weight matrices for generating a QKV matrix from a flash memory of the electronic device 1000 in operation 1501, and obtain encrypted weight matrices from the flash memory in operation 1502.

In operation 1503, the QKV/W generation module of the electronic device 1000 may decrypt the obtained weight matrices and store the decrypted weight matrices in the cache memory of the electronic device 1000.

Referring back to FIG. 14, In operation 1403, the QKV/W retrieval module of the electronic device 1000 may provide, to the PEFT model, the weight matrices stored in the cache memory.

Returning back to FIG. 11, in operation 1108, the electronic device 1000 may perform the task requested by the user by executing the PEFT model using the obtained at least one matrix. According to an embodiment of the disclosure, the electronic device 1000 may generate a QKV/W matrix using personal data stored in the flash memory, and cause the PEFT model to be executed using the generated QKV/W matrix. Alternatively, according to an embodiment of the disclosure, the electronic device 1000 may obtain a QKV matrix using personal data stored in the flash memory and obtained weight matrices, and cause the PEFT model to be executed using the obtained QKV matrix.

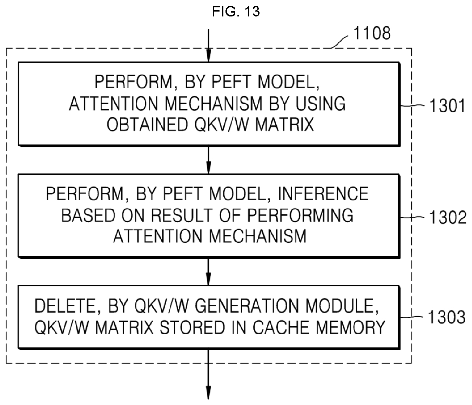

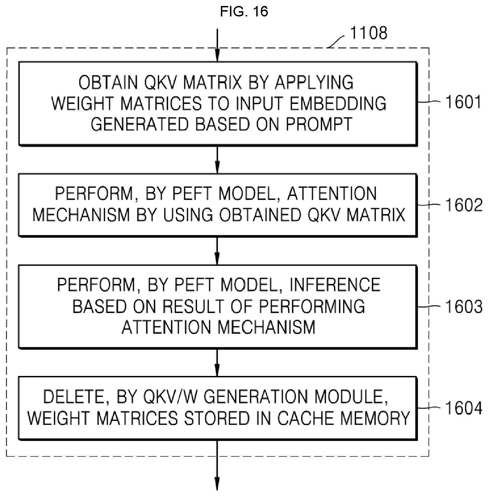

Detailed operations included in operation 1108 are illustrated in FIGS. 13 and 16.

Referring to FIG. 13, in operation 1301, the electronic device 1000 may control the PEFT model to perform an attention mechanism using the obtained QKV/W matrix.

In operation 1302, the electronic device 1000 may control the PEFT model to perform inference based on a result of performing the attention mechanism.

When the task requested by the user is completed, in operation 1303, the QKV/W/W generation module of the electronic device 1000 may delete the QKV/W matrix stored in the cache memory.

Referring to FIG. 16, in operation 1601, the electronic device 1000 may obtain a QKV matrix by applying the weight matrices to an input embedding generated based on the prompt.

In operation 1602, the electronic device 1000 may control the PEFT model to perform an attention mechanism using the obtained QKV matrix.

In operation 1603, the electronic device 1000 may control the PEFT model to perform inference based on a result of performing the attention mechanism.

When the task requested by the user is completed, in operation 1604, the QKV/W/W generation module of the electronic device 1000 may delete the weight matrices stored in the cache memory. When the QKV matrix is also stored in the cache memory, the QKV/W generation module may also delete the QKV matrix from the cache memory.

On the other hand, when, in operation 1105 of FIG. 11 of determining whether the authentication is successful, it is determined that the authentication fails, the electronic device 1000 may perform operation 1107 to execute the PEFT model using a randomly generated QKV/W matrix. In this case, the PEFT model operates as a dummy model.

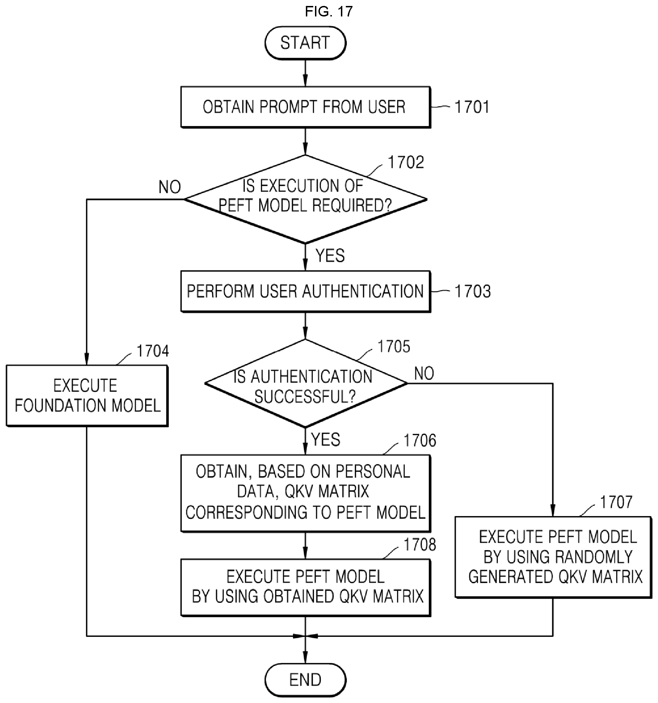

Referring to FIG. 17, in operation 1701, a process may begin with the electronic device 1000 obtaining a prompt from the user. In operation 1702, the electronic device 1000 may determine whether execution of a PEFT model is required to perform a task according to the prompt input by the user.

When it is determined that the execution of the PEFT model is not required, the electronic device 1000 may perform operation 1704 to execute a foundation model. In other words, the electronic device 1000 may perform the task requested by the user using only the foundation model that is a pretrained model without using the PEFT model to which the foundation model is fine-tuned.

When it is determined that the execution of the PEFT model is required, the electronic device 1000 may perform operation 1703 to perform user authentication. The electronic device 1000 may perform authentication on the user to verify whether the user has an authority to execute the PEFT model.

According to an embodiment of the disclosure, the authentication for verifying whether the user has the authority to execute the PEFT model may be performed in a different manner than authentication for use of the electronic device 1000. For example, in a case where the user starts using the electronic device 1000 and unlocks the electronic device 1000 according to a first authentication method (e.g., authentication via a password), the electronic device 1000 may additionally perform authentication on the user according to a second authentication method (e.g., biometric authentication) when the execution of the PEFT model is required. In this case, the second authentication method may have higher security than the first authentication method. However, when the user starts using the electronic device 1000 and unlocks the electronic device 1000 according to the second authentication method, the electronic device 1000 may determine that the user has the authority to execute the PEFT model without performing additional authentication thereon.

In operation 1705, the electronic device 1000 may determine whether the authentication is successful.

When the authentication is successful, the electronic device 1000 may perform operation 1706 to obtain a QKV matrix corresponding to the PEFT model based on the user's personal data. In other words, when the user authentication is successful, the electronic device 1000 may generate the QKV matrix for executing the PEFT model. In this case, the electronic device 1000 may also obtain weight matrices corresponding to the PEFT model in order to generate the QKV matrix. A specific method by which the electronic device 1000 obtains weight matrices corresponding to the PEFT model is as described above with reference to FIGS. 14 and 15.

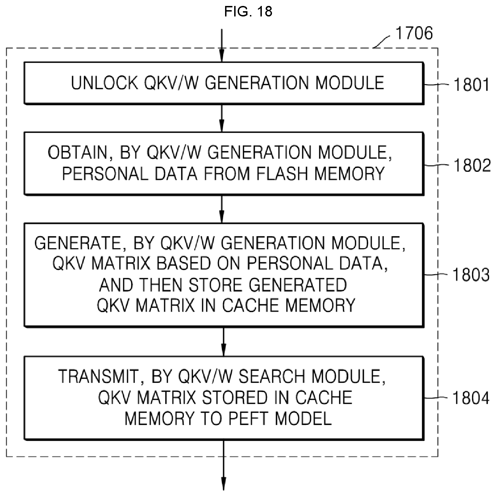

Detailed operations included in operation 1706 are illustrated in FIG. 18. Referring to FIG. 18, in operation 1801, the electronic device 1000 may unlock the QKV/W generation module.

In operation 1802, the unlocked QKV/W generation module may obtain personal data from the flash memory of the electronic device 1000.

In operation 1803, the QKV/W generation module of the electronic device 1000 may generate a QKV matrix based on the personal data and store the generated QKV matrix in the cache memory.

In operation 1804, the QKV/W retrieval module of the electronic device 1000 may provide, to the PEFT model, the QKV matrix stored in the cache memory.

Referring back to FIG. 17, in operation 1708, the electronic device 1000 may execute the PEFT model using the obtained QKV matrix.

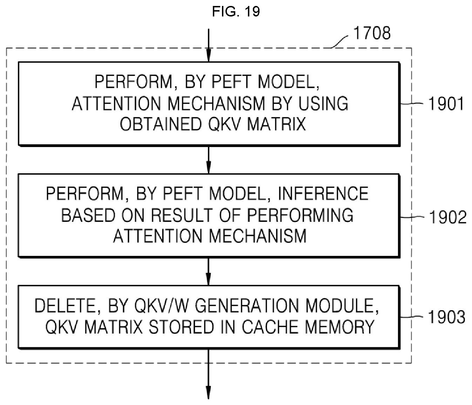

Detailed operations included in operation 1708 are illustrated in FIG. 19. Referring to FIG. 19, in operation 1901, the electronic device 1000 may control the PEFT model to perform an attention mechanism using the obtained QKV matrix.

In operation 1902, the electronic device 1000 may control the PEFT model to perform inference based on a result of performing the attention mechanism.

In operation 1903, the QKV/W/W generation module of the electronic device 1000 may delete the QKV matrix stored in the cache memory.

On the other hand, when, in operation 1705 of determining whether the authentication is successful, it is determined that the authentication fails, the electronic device 1000 may perform operation 1707 to execute the PEFT model using a randomly generated QKV matrix. In this case, the PEFT model operates as a dummy model.

According to the embodiments of the disclosure described above, the PEFT model that reflects the user's personal data may provide the effect of increasing security by being executed only when authentication of the user is successful.

A method of processing a user request using a PEFT model, according to an embodiment of the disclosure, may include obtaining, by an electronic device, a prompt from a user, determining, by the electronic device, whether execution of the PEFT model is required to process the prompt, executing, by the electronic device, a foundation model when the execution of the PEFT model is not required and performing user authentication when the execution of the PEFT model is required, obtaining, by the electronic device, at least one matrix corresponding to the PEFT model when the user authentication is successful, and executing, by the electronic device, the PEFT model using the at least one matrix.

According to an embodiment of the disclosure, the obtaining of the at least one matrix corresponding to the PEFT model may include unlocking a QKV/W generation module, generating a QKV/W matrix and storing the generated QKV/W matrix in a cache memory, wherein the generating and the storing are performed by a QKV/W generation module, and providing, by a QKV/W retrieval module, the QKV/W matrix stored in the cache memory to the PEFT model.

According to an embodiment of the disclosure, the executing of the PEFT model using the at least one matrix may include performing, by the PEFT model, an attention mechanism using the generated QKV/W matrix, performing, by the PEFT model, inference based on a result of the performing of the attention mechanism, and deleting, by the QKV/W generation module, the QKV/W matrix stored in the cache memory.

According to an embodiment of the disclosure, the QKV/W generation module may be a generative model trained using QKV/W matrices generated in a process of fine-tuning the foundation model to the PEFT model.

According to an embodiment of the disclosure, a weight matrix may be a matrix used for generating a QKV matrix required to execute the PEFT model.

According to an embodiment of the disclosure, the obtaining of the at least one matrix may include unlocking the QKV/W generation module, storing, by the QKV/W generation module, in the cache memory, the weight matrix used for generating the QKV matrix, and providing, by the QKV/W retrieval module, the weight matrix stored in the cache memory to the PEFT model.

According to an embodiment of the disclosure, the storing of the weight matrix in the cache memory may include requesting, by the QKV/W generation module, a flash memory for the weight matrix used for generating the QKV matrix, obtaining, by the QKV/W generation module, an encrypted weight matrix from the flash memory, and decrypting, by the QKV/W generation module, the obtained weight matrix and storing the decrypted weight matrix in the cache memory.

According to an embodiment of the disclosure, the executing of the PEFT model may include obtaining the QKV matrix by applying the weight matrix to an input embedding generated based on the prompt, controlling the PEFT model to perform an attention mechanism using the QKV matrix, controlling the PEFT model to perform inference based on a result of the performing of the attention mechanism, and deleting, by the QKV/W generation module, the weight matrix stored in the cache memory.

According to an embodiment of the disclosure, the obtaining of the QKV matrix may include obtaining personal data of the user stored in the flash memory, generating an input embedding based on the prompt and the personal data, and obtaining the QKV matrix by applying the weight matrix to the input embedding.

An electronic device according to an embodiment of the disclosure may include memory storing a program or at least one instruction, and at least one processor, wherein the at least one processor is configured to execute the program or at least one instruction stored in the memory to cause the electronic device to obtain a prompt from a user, determine whether execution of a PEFT model is required to process the prompt, execute a foundation model when the execution of the PEFT model is not required and perform user authentication when the execution of the PEFT model is required, obtain at least one matrix corresponding to the PEFT model when the user authentication is successful, and execute the PEFT model using the at least one matrix.

According to an embodiment of the disclosure, in the obtaining of the at least one matrix corresponding to the PEFT model, the electronic device may be configured to unlock a QKV/W generation module, generate, by the QKV/W generation module, a QKV/W matrix and store the generated QKV/W matrix in a cache memory, and provide, by a QKV/W retrieval module, the QKV/W matrix stored in the cache memory to the PEFT model.

According to an embodiment of the disclosure, in the executing of the PEFT model using the at least one matrix, the electronic device may be configured to perform, by the PEFT model, an attention mechanism using the generated QKV/W matrix, perform, by the PEFT model, inference based on a result of the performing of the attention mechanism, and delete, by the QKV/W generation module, the QKV/W matrix stored in the cache memory.

According to an embodiment of the disclosure, the QKV/W generation module may be a generative model trained using QKV/W matrices generated in a process of fine-tuning the foundation model to the PEFT model.

According to an embodiment of the disclosure, a weight matrix may be a matrix used for generating a QKV matrix required to execute the PEFT model.

According to an embodiment of the disclosure, in the obtaining of the at least one matrix, the electronic device may be configured to unlock the QKV/W generation module, store, by the QKV/W generation module, in the cache memory, the weight matrix used for generating the QKV matrix, and provide, by the QKV/W retrieval module, the weight matrix stored in the cache memory to the PEFT model.

According to an embodiment of the disclosure, in the storing of the weight matrix in the cache memory, the electronic device may be configured to control the QKV/W generation module to request a flash memory for the weight matrix used for generating the QKV matrix, control the QKV/W generation module to obtain an encrypted weight matrix from the flash memory, and control the QKV/W generation module to decrypt the obtained weight matrix and store the decrypted weight matrix in the cache memory.

According to an embodiment of the disclosure, in the executing of the PEFT model, the electronic device may be configured to obtain the QKV matrix by applying the weight matrix to an input embedding generated based on the prompt, control the PEFT model to perform an attention mechanism using the QKV matrix, control the PEFT model to perform inference based on a result of the performing of the attention mechanism, and control the QKV/W generation module to delete the weight matrix stored in the cache memory.

According to an embodiment of the disclosure, in the obtaining of the QKV matrix, the electronic device may be configured to obtain personal data of the user stored in the flash memory, generate an input embedding based on the prompt and the personal data, and obtain the QKV matrix by applying the weight matrix to the input embedding.

One or more embodiments of the disclosure may be implemented or supported by one or more computer programs that may be created from computer-readable program code and included on computer-readable media. As used herein, the terms "application" and "program" may refer to one or more computer programs, software components, instruction sets, procedures, functions, objects, classes, instances, associated data, or parts thereof suitable for implementation in computer-readable program code. The "computer-readable program code" may include various types of computer code, including source code, object code, and executable code. The "computer-readable media" may include various types of media that are accessible by a computer, such as ROM, RAM, hard disk drives (HDDs), CDs, DVDs, or various other types of memory.

Furthermore, a machine-readable storage medium may be provided in the form of a non-transitory storage medium. Here, the "non-transitory storage medium" is a tangible device and may exclude wired, wireless, optical, or other communication links that transmit transient electrical or other signals. Moreover, the term "non-transitory storage medium" does not differentiate between where data is semi-permanently stored in the storage medium and where the data is temporarily stored in the storage medium. For example, the "non-transitory storage medium" may include a buffer for temporarily storing data. The computer-readable media may be any available media that are accessible by a computer and include both volatile and nonvolatile media and both removable and non-removable media. The computer-readable media include media on which data may be permanently stored and media on which data may be stored and overwritten later, such as rewritable optical disks or erasable memory devices.

According to an embodiment of the disclosure, methods according to one or more embodiments of the disclosure set forth herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description of the disclosure is provided for illustration, and it will be understood by those of ordinary skill in the art that changes in form and details may be readily made therein without departing from technical idea or essential characteristics of the disclosure. For example, adequate effects may be achieved even when the above-described techniques are performed in a different order than that described above, and/or the aforementioned components of the systems, structures, devices, circuits, etc. are coupled or combined in different forms and modes than those described above or are replaced or supplemented by other components or their equivalents. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method of processing a user request by an electronic device using a parameter efficient fine-tuning (PEFT) model, the method comprising:
obtaining, by the electronic device, a prompt from a user;
determining, by the electronic device, whether execution of the PEFT model is required to process the prompt;
based on determining that execution of the PEFT model is not required, executing a foundation model by the electronic device;
based on determining that execution of the PEFT model is required, performing user authentication by the electronic device;
based on the user authentication being successful, obtaining, by the electronic device, at least one matrix corresponding to the PEFT model; and
executing, by the electronic device, the PEFT model using the at least one matrix.

2. The method of claim 1, wherein the obtaining the at least one matrix comprises:
unlocking a Query Key Value/Weight (QKV/W) generation module;
generating, by the QKV/W generation module, a QKV/W matrix and storing the QKV/W matrix in a cache memory of the electronic device; and
providing, by a QKV/W retrieval module, the QKV/W matrix to the PEFT model.

3. The method of claim 1 or 2, wherein the executing the PEFT model using the at least one matrix comprises:
performing, by the PEFT model, an attention mechanism using the QKV/W matrix;
performing, by the PEFT model, inference based on a result of the performing the attention mechanism; and
deleting, by the QKV/W generation module, the QKV/W matrix from the cache memory.

4. The method of any one of claims 1 to 3, wherein the QKV/W generation module is a generative model trained using QKV/W matrices generated in a process of fine-tuning the foundation model to the PEFT model.

5. The method of any one of claims 1 to 4, wherein the obtaining the at least one matrix comprises:
unlocking the QKV/W generation module;
storing in the cache memory, by the QKV/W generation module, a weight matrix used for generating the QKV matrix; and
providing, by the QKV/W retrieval module, the weight matrix to the PEFT model.

6. The method of any one of claims 1 to 5, wherein the storing the weight matrix in the cache memory comprises:
requesting, by the QKV/W generation module, a flash memory of the electronic device for the weight matrix;
obtaining, by the QKV/W generation module, an encrypted weight matrix from the flash memory; and
decrypting the encrypted weight matrix and storing the decrypted weight matrix in the cache memory, wherein the decrypting and the storing are performed by the QKV/W generation module.

7. The method of any one of claims 1 to 6, wherein the executing the PEFT model comprises:
obtaining the QKV matrix by applying the weight matrix to an input embedding generated based on the prompt;
controlling the PEFT model to perform an attention mechanism using the QKV matrix;
controlling the PEFT model to perform inference based on a result of the performing the attention mechanism; and
deleting, by the QKV/W generation module, the weight matrix from the cache memory.

8. The method of any one of claims 1 to 7, wherein the obtaining the QKV matrix comprises:
obtaining personal data of the user stored in the flash memory;
generating the input embedding based on the prompt and the personal data; and
obtaining the QKV matrix by applying the weight matrix to the input embedding.

9. An electronic device (1000) comprising:
memory (1400) storing a program or at least one instruction; and
at least one processor (1300) configured to individually or collectively execute the program or the at least one instruction, wherein the program or the at least one instruction, when executed individually or collectively by the at least one processor (1300), cause the electronic device (1000) to:
obtain a prompt from a user,
determine whether execution of a parameter efficient fine-tuning (PEFT) model (30) is required to process the prompt,
based on determining that execution of the PEFT model (30) is not required, execute a foundation model (10),
based on determining that execution of the PEFT model (30) is required, perform user authentication,
based on the user authentication being successful, obtain at least one matrix corresponding to the PEFT model (30), and
execute the PEFT model (30) using the at least one matrix.

10. The electronic device of claim 9, further comprising a cache memory (350),
wherein the program or the at least one instruction, when executed individually or collectively by the at least one processor (1300), cause the electronic device (1000) to obtain the at least one matrix by:
unlocking a Query Key Value/Weight (QKV/W) generation module (331), generating, by the QKV/W generation module (331), a QKV/W matrix and storing the generated QKV/W matrix in the cache memory (350), and
providing" by a QKV/W retrieval module (332), the QKV/W matrix to the PEFT model (30).

11. The electronic device of claim 9 or 10, wherein the program or the at least one instruction, when executed individually or collectively by the at least one processor (1300), cause the electronic device (1000) to execute the PEFT model (30) by:
performing, by the PEFT model (30), an attention mechanism using the QKV/W matrix,
performing, by the PEFT model (30), inference based on a result of the performing the attention mechanism, and
deleting, by the QKV/W generation module (331), the QKV/W matrix from the cache memory (350).

12. The electronic device of any one of claims 9 to 11, wherein the QKV/W generation module (331) is a generative model trained using QKV/W matrices generated in a process of fine-tuning the foundation model (10) to the PEFT model (30).

13. The electronic device of any one of claims 9 to 12, wherein the program or the at least one instruction, when executed individually or collectively by the at least one processor (1300), cause the electronic device (1000) to obtain the at least one matrix by:
unlocking the QKV/W generation module (331),
storing in the cache memory, by the QKV/W generation module (331), the weight matrix used for generating the QKV matrix, and
providing, , by the QKV/W retrieval module (332), the weight matrix to the PEFT model (30).

14. The electronic device of any one of claims 9 to 13, wherein the program or the at least one instruction, when executed individually or collectively by the at least one processor (1300), cause the electronic device (1000) to store the weight matrix in the cache memory (350) by:
controlling the QKV/W generation module (331)to request a flash memory (340) for the weight matrix,
controlling the QKV/W generation module (331) to obtain an encrypted weight matrix from the flash memory (340), and
controlling the QKV/W generation module (331) to decrypt the encrypted weight matrix and store the decrypted weight matrix in the cache memory (350).

15. The electronic device of any one of claims 9 to 14, wherein the program or the at least one instruction, when executed individually or collectively by the at least one processor (1300), cause the electronic device (1000) to execute the PEFT model (30) by:
obtaining the QKV matrix by applying the weight matrix to an input embedding generated based on the prompt,
controlling the PEFT model (30) to perform an attention mechanism using the QKV matrix,
controlling the PEFT model (30) to perform inference based on a result of the performing the attention mechanism, and
controlling the QKV/W generation module (331) to delete the weight matrix from the cache memory (350).
